# EUROPÄISCHE PATENTSCHRIFT

(11) **EP 3 241 666 B1**
(45) Veröffentlichungstag und Bekanntmachung des Hinweises auf die Patenterteilung: **21.11.2018**
(21) Anmeldenummer: 16168282.8
(22) Anmeldetag: 04.05.2016
(51) Int. Cl.: B29C 65/22, B29C 65/00

(54) **HEIZEINRICHTUNG**
HEATING DEVICE
DISPOSITIF DE CHAUFFAGE

(43) Veröffentlichungstag der Anmeldung: 08.11.2017
(73) Patentinhaber: ROPEX Industrie-Elektronik GmbH, 74321 Bietigheim-Bissingen (DE)
(72) Erfinder: Peters, Robert, 74321 Bietigheim-Bissingen (DE); Hupp, Alexander, 75056 Sulzfeld (DE)
(74) Vertreter: Patentanwälte Magenbauer & Kollegen Partnerschaft mbB

(56) Entgegenhaltungen:
- WO-A1-91/08954
- DE-A1- 4 318 415
- DE-A1- 4 333 852
- US-A- 3 466 979

## Beschreibung

Die Erfindung betrifft eine Heizeinrichtung zum thermischen Fügen von Kunststoffmaterialien, mit einem Grundkörper, der von einer Kühlausnehmung durchsetzt ist und an dem eine elektrisch isolierende Trägerfläche ausgebildet ist, auf der wenigstens ein elektrisch leitfähiger Heizleiter angeordnet ist, der an einer der Trägerfläche abgewandten Kontaktoberfläche mit einer elektrisch isolierenden Beschichtung versehen ist, wobei die Trägerfläche wenigstens einen gekrümmten oder abgewinkelten Trägerflächenabschnitt aufweist und wobei der Heizleiter den gekrümmten oder abgewinkelten Trägerflächenabschnitt zumindest bereichsweise überdeckt.

Aus der DE 197 37 471 C2 ist eine Heizeinrichtung für Geräte zum thermischen Bearbeiten von Folien mit einem einer Kühlvorrichtung zugeordneten Substrat aus Metall bekannt, wobei auf dem Substrat eine elektrisch isolierende Schicht aufgebracht ist, auf der mindestens eine Dickschichtleiterbahn als Heizleiter aufgebracht ist.

Die US 3,446,979 offenbar eine Vorrichtung zum Heißsiegeln mehrerer thermoplastischer Schichten mit einem elektrisch kontinuierlich erhitzten Band und einer Kühleinrichtung, die als rohrförmiges Element ausgebildet und mit Kühlfluid gefüllt ist. Zunächst ist ein Abstand zwischen dem Band und dem gekühlten Rohr vorgesehen, aber im Gebrauch wird das Band gegen das Rohr gedrückt, wodurch eine rasche Abkühlung des Bandes hervorgerufen werden kann, so dass die vom Band an den thermoplastischen Schichten hervorgerufene Schweißnah rasch verfestigt wird.

Aus der WO 91/08954 A1 ist eine Heißsiegelvorrichtung für eine Nutzung an Klemmbacken von Form-, Füll- und Verschließmaschinen bekannt. Die Heißsiegelvorrichtung erzeugt in einem einzigen Arbeitsgang eine Querversiegelung in einem thermoplastischen Folienschlauch, wobei gleichzeitig eine Oberseite des gefüllten Folienschlauchbehälters verschlossen wird und eine Bodennaht für den nächsten zu befüllenden Folienschlauchbehälter geschaffen wird.

Die DE 43 18 415 A1 offenbart ein Schweißelement für Folienschweißmaschinen mit einem langgestreckten elektrischen Heizleiter und einem diesen stützenden Träger, wobei der Heizleiter über seine gesamte Länge vollflächig fest mit dem Träger verbunden ist.

Aus der DE 43 33 852 A1 ist ein elektrisches Heizelement für Folienschweißgeräte mit einer Dickschichtleiterbahn auf einem Keramikgrundkörper als Heizleiter bekannt, wobei eine Temperatur bzw. Heizleistung des Heizleiters in seiner Längsrichtung variierbar ist und wobei der Heizleiter eine geringe thermische Trägheit aufweist. Hierzu ist vorgesehen, die Breite und/oder Dicke der Dickschichtleiterbahn und gegebenenfalls die Dicke einer nicht zwangsläufig durchgängigen thermisch und elektrisch isolierenden Schicht unter der Dickschichtleiterbahn zu variieren.

Die Aufgabe der Erfindung besteht darin, eine Heizeinrichtung bereitzustellen, mit der eine verbesserte Nahtqualität für die mit der Heizeinrichtung herzustellenden Kunststoff-Schweißnähte erzielt werden kann.

Diese Aufgabe wird für eine Heizeinrichtung der eingangs genannten Art mit den Merkmalen des Anspruchs 1 gelöst..

Dabei bilden der gekrümmte oder abgewinkelte Trägerflächenabschnitt mit dem zugeordneten Heizleiter an den zu schweißenden Kunststoffmaterial je nach Verlauf der Krümmung oder der Abwinklung einen dreidimensional konturierten Vorsprung oder eine dreidimensional konturierte Vertiefung. Ein von der Geometrie des Heizleiters mitbestimmter Nahtverlaufspfad einer Schweiß- oder Siegelnaht, die mit Hilfe der Heizeinrichtung und einer korrespondierend ausgebildeten Andruckvorrichtung an einem, beispielhaft als Kunststofffolie ausgebildeten, Kunststoffmaterial hergestellt werden kann, verläuft bei einer einfacheren Ausgestaltung der Heizeinrichtung in einer Heizleiterebene, die abweichend vom Stand der Technik nicht deckungsgleich mit einer von Außenkanten der Trägerfläche bestimmten Trägerflächenebene ist. Vorzugsweise verläuft die Schweiß- oder Siegelnaht entlang eines dreidimensionalen Nahtverlaufspfads. Exemplarisch kann vorgesehen sein, dass die Trägerfläche und der Heizleiter überwiegend in der von Außenkanten der Trägerfläche bestimmten Trägerflächenebene angeordnet sind und nur lokal die Trägerflächenebene verlassen. Vorzugsweise entspricht die Trägerflächenebene auch einer Schließebene für ein aus der Heizeinrichtung und der Andruckeinrichtung bestimmtes Schweiß- oder Siegelwerkzeug.

Erfindungsgemäß ist vorgesehen, dass die elektrisch isolierende Trägerfläche von einer keramischen Beschichtung bestimmt wird, die auf eine am Grundkörper ausgebildete Andruckfläche aufgebracht
ist. Die Andruckfläche ist diejenige Fläche am Grundkörper, die zu einer Kontaktfläche korrespondiert, die ihrerseits bei einem Schweißvorgang oder Siegelvorgang in Kontakt mit dem zu verarbeitenden Kunststoffmaterial kommt. Die Kontaktfläche kann auch als Arbeitsoberfläche der Heizeinrichtung bezeichnet werden und wird im Wesentlichen durch die Trägerfläche, den darauf aufgebrachten Heizleiter und durch die der Trägerfläche abgewandte elektrische Isolation für den Heizleiter sowie einer gegebenenfalls großflächig ausgebildeten Antihaftbeschichtung bestimmt. Die keramische Beschichtung auf der Andruckfläche, deren der Andruckfläche entgegengesetzte Oberfläche die Trägerfläche bildet, gewährleistet bereits bei geringer Schichtdicke eine zuverlässige elektrische Isolation für den auf der Trägerfläche aufgebrachten Heizleiter gegenüber der Andruckfläche des Grundkörpers. Ferner dient die keramische Beschichtung einer vorteilhaften Wärmekopplung zwischen dem Heizleiter und dem Grundkörper, so dass nach Beendigung einer Strombeaufschlagung des Heizleiters die Wärmeenergie aus dem zu bearbeitenden Kunststoffteil sowie dem Heizleiter besonders rasch durch die keramische Beschichtung hindurch bis zum Grundkörper geleitet werden kann, wo mit Hilfe einer Fluidströmung, insbesondere Flüssigkeitsströmung, durch die Kühlausnehmung ein weiterer Wärmeabtransport erfolgt. Hierdurch werden eine rasche Abkühlung und eine damit einhergehende Verfestigung des Siegel- oder Schweißnahtbereichs am Kunststoffteil erzielt. Die keramische Beschichtung kann vorzugsweise als Glaskeramik, insbesondere mit einer Schichtdicke von 10/1000 mm bis 400/1000 mm, ausgebildet werden.

Bei einer vorteilhaften Weiterbildung der Erfindung ist vorgesehen, dass eine Wandstärke des Grundkörpers zwischen der Kühlausnehmung und der Andruckfläche unterhalb der elektrisch isolierenden Trägerfläche konstant ist. Hierdurch gewährleistet, dass ein Wärmetransport zwischen der Andruckfläche und einem in der Kühlausnehmung aufgenommen, insbesondere die Kühlausnehmung durchströmenden, Kühlfluid in jedem Bereich der Andruckfläche zumindest nahezu identisch ist. Dies ist insbesondere dann von Vorteil, wenn die an der Trägerfläche vorgesehenen Krümmungen und/oder Abwinklungen aufgrund ihrer Geometrien nicht zu lokalen Wärmekonzentrationen in der Schweiß- oder Siegelnaht führen. Bei einer konstanten Wandstärke für den Grundkörper zwischen der Kühlausnehmung und der Andruckfläche kann vorgesehen sein, dass die Oberflächengeometrie der Trägerfläche und der Verlauf des Heizleiters durch lokal unterschiedliche Wandstärken der keramischen Beschichtung verwirklicht werden. Beispielhaft ist vorgesehen, dass der Grundkörper aus einem Metallprofil mit konstantem Querschnitt hergestellt ist und dass die keramische Beschichtung mit lokal unterschiedlichen Schichtdicken auf die Andruckfläche aufgetragen wird. Alternativ kann vorgesehen werden, dass die Oberflächengeometrie der Trägerfläche bereits am Grundkörper ausgebildet wird, wobei hier sowohl die Andruckfläche als auch einen der Andruckfläche entgegengesetzte Innenoberfläche in der Kühlausnehmung zumindest geometrische Ähnlichkeiten aufweisen, insbesondere geometrisch ähnlich sind. Bei einer Ausführung des Grundkörpers aus einem keramischen Werkstoff ist vorgesehen, dass eine der Andruckfläche entgegengesetzte Innenoberfläche in der Kühlausnehmung und die Andruckfläche, die insbesondere mit der Trägerfläche gleichzusetzen ist, zumindest geometrische Ähnlichkeiten aufweisen, insbesondere geometrisch ähnlich sind. Somit kann über die gesamte Trägerfläche trotz der konturierten Oberfläche stets überall die gleiche Wandstärke zwischen Kühlausnehmung und Andruckfläche (bzw. in diesem Fall auch der Trägerfläche) verwirklicht werden.

In weiterer Ausgestaltung der Erfindung ist vorgesehen, dass eine erste Wandstärke des Grundkörpers zwischen der Kühlausnehmung und der Andruckfläche unterhalb eines konkav gekrümmten Trägerflächenabschnitts kleiner als eine zweite Wandstärke des Grundkörpers zwischen der Kühlausnehmung und der Andruckfläche unterhalb eines ebenen oder konvex gekrümmten Trägerflächenabschnitts ausgebildet ist. Bei einem derartigen Verlauf der Wandstärke des Grundkörpers wird berücksichtigt, dass in konkav gekrümmten Trägerflächenabschnitten eine höhere Energiedichte während der Durchführung des Siegel- oder Schweißvorgangs auftritt, die jedoch nicht zu einer Überhitzung des zu verarbeitenden Kunststoffmaterials führen darf. Dies wird dadurch verhindert, dass in derartigen Bereichen ein verbesserter Wärmeabtransport durch den Grundkörper in das Kühlfluid mit Hilfe der verringerten Wandstärke gewährleistet wird.

Bevorzugt ist vorgesehen, dass eine neutrale Faser des Heizleiters eine vorgebbare räumliche Gestaltung aufweist und/oder dass die Andruckfläche eine zu einer räumlichen Gestaltung einer neutralen Faser des Heizleiters korrespondierende, vorzugsweise geometrisch ähnliche, Oberflächengeometrie aufweist. Als neutrale Faser soll ein längs des Heizleiters erstreckter Linienzug verstanden werden, der stets innerhalb eines Querschnitts des Heizleiters angeordnet ist und der bei einer Deformation des Heizleiters keine oder nur minimale Zug- und oder Druckspannungen erfährt. Die neutrale Faser kann sowohl bei einer Herstellung des Heizleiters aus einem Bandmaterial, das beispielhaft in einem Laminierverfahren auf die Trägerfläche aufgebracht wird, als auch bei einer Herstellung des Heizleiters in einem Verfahren, bei dem eine elektrisch leitende, gestaltlose Masse auf die Trägerfläche aufgebracht wird, mit den Methoden der Elastokinematik bestimmt werden und dient hier der Beschreibung des Verlaufs des Heizleiters. Diese neutrale Faser oder Nulllinie, weist für den erfindungsgemäßen Heizleiter eine Ausdehnung in allen Raumrichtungen eines kartesischen Koordinatensystems auf.

Vorteilhaft ist es, wenn eine Schichtdicke der keramischen Beschichtung, die auf die Andruckfläche aufgebracht ist, konstant ist. Hierdurch wird eine einfache Herstellung der keramischen Beschichtung ermöglicht, beispielsweise durch Auflegen einer vorgefertigten, insbesondere auf einem biegeschlaffen Trägermaterial aufgebrachten, Rohmaterialschicht der Glaskeramik, die in einem anschließenden Herstellungsschritt derart erhitzt wird, dass sie eine stoffschlüssige Verbindung mit der Andruckoberfläche eingeht und die Trägerfläche ausbildet.

Zweckmäßig ist es, wenn die Andruckfläche eben ausgebildet ist und wenn eine Schichtdicke der keramischen Beschichtung, die auf die ebene Andruckfläche aufgebracht ist, variabel ausgebildet ist, um den wenigstens einen gekrümmten Trägerflächenabschnitt zu bilden. Dies ermöglicht eine einfache und kostengünstige Gestaltung des Grundkörpers, wobei die Oberflächengeometrie für die Kontaktfläche der Heizeinrichtung von einer Schichtdickenverteilung der keramischen Beschichtung in Kombination mit dem darauf aufgebrachten Heizleiter, der Isolation für den Heizleiter und einer gegebenenfalls vorgesehenen Antihaftbeschichtung bestimmt wird.

In weiterer Ausgestaltung der Erfindung ist vorgesehen, dass der Heizleiter derart räumlich ausgebildet ist, dass er sich in einer Raumrichtung, in der eine Querschnittserstreckung des Heizleiters minimal ist, zwischen zwei parallel zueinander ausgerichteten Ebenen erstreckt, deren Abstand größer als die Querschnittserstreckung in dieser Raumrichtung ist. Dabei ist die Querschnittserstreckung ein Abstand zwischen entgegengesetzten Außenflächen des Heizleiters. Beispielhaft entspricht eine minimale Querschnittserstreckung eines mit rechteckigem Querschnitt ausgebildeten Heizleiters der Länge einer kürzeren Kante des Rechtequerschnitts. Aufgrund seiner räumlichen Gestaltung erstreckt sich der Heizleiter in derjenigen Raumrichtung, in der die minimale Querschnittserstreckung vorliegt, zwischen zwei zueinander parallelen Ebenen, deren Abstand größer als die minimale Querschnittserstreckung ist.

Vorzugsweise ist vorgesehen, dass der Heizleiter derart räumlich ausgebildet ist, dass er sich in einer Raumrichtung, in der eine Querschnittserstreckung des Heizleiters maximal ist, zwischen zwei parallel zueinander ausgerichteten Ebenen erstreckt, deren Abstand größer als die Querschnittserstreckung in dieser Raumrichtung ist.

In weiterer Ausgestaltung der Erfindung ist vorgesehen, dass der Heizleiter in Querschnittsebenen, die quer zu einer neutralen Faser des Heizleiters ausgerichtet sind, unterschiedliche Querschnitte aufweist. Hierdurch werden längs der neutralen Faser des Heizleiters jeweils Abschnitte gebildet, die unterschiedliche elektrische Widerstände aufweisen, so dass beispielsweise Einfluss auf eine Temperaturverteilung längs des Heizleiters genommen werden kann. Dabei können wahlweise sprunghafte oder stetige Querschnittsveränderungen für den Heizleiter vorgesehen werden.

Vorteilhafte Ausführungsformen der Erfindung sind in der Zeichnung dargestellt. Hierbei zeigt:
- Figur 1: eine rein schematische, nicht maßstäblich dargestellte, geschnittene Vorderansicht einer ersten Ausführungsform einer Heizeinrichtung,
- Figur 2: eine Draufsicht auf die Heizeinrichtung gemäß der Figur 1,
- Figur 3: eine Seitenansicht der Heizeinrichtung gemäß der Figur 1,
- Figur 4: eine rein schematische, nicht maßstäblich dargestellte, geschnittene Vorderansicht einer zweiten Ausführungsform einer Heizeinrichtung,
- Figur 5: eine Draufsicht auf die Heizeinrichtung gemäß der Figur 4, und
- Figur 6: eine Seitenansicht der Heizeinrichtung gemäß der Figur 4.

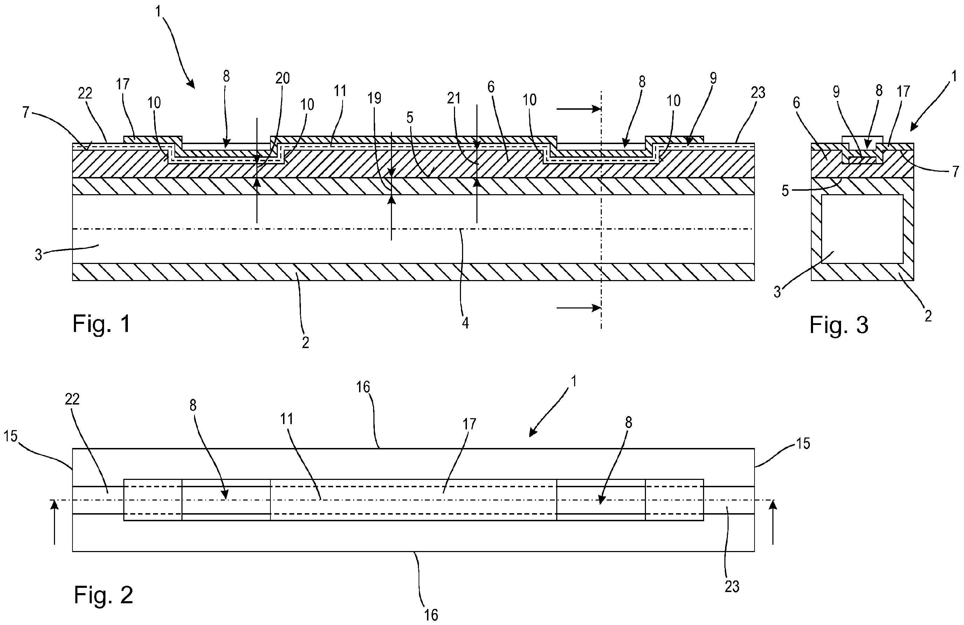

Eine in den Figuren 1 bis 3 dargestellte erste Ausführungsform einer Heizeinrichtung 1 ist zur Verwendung mit einer nicht dargestellten Andruckeinrichtung zur Bildung eines Schweißwerkzeugs oder Siegelwerkzeugs vorgesehen und kann beispielhaft in einer ebenfalls nicht dargestellten, elektrisch betriebenen Schweißmaschine oder Siegelmaschine, insbesondere zum stoffschlüssigen, thermischen Fügen offener Endbereiche von Kunststoff-Folienschläuchen zu Folienbeuteln, eingesetzt werden.

Die Heizeinrichtung 1 umfasst hierzu einen Grundkörper 2, der in der Art eines Rechteckprofils ausgebildet sein kann und der eine Kühlausnehmung 3 umfasst. Rein exemplarisch ist vorgesehen, dass der Grundkörper 2 in Querschnittsebenen, die quer zu einer Profilachse 4 ausgerichtet sind, über seine gesamte Länge den gleichen Querschnitt aufweist. Ferner ist beispielhaft vorgesehen, dass Querschnitte einer Außengeometrie des Grundkörpers 2 und der Kühlausnehmung 3 jeweils rechteckig ausgebildet sind. Vorzugsweise ist der Grundkörper 2 aus Metall, insbesondere Aluminium, oder aus einem keramischen Werkstoff hergestellt.

An einer Außenoberfläche des Grundkörpers 2, die auch als Andruckfläche 5 bezeichnet wird, ist eine keramische Beschichtung 6 aufgebracht, die stoffschlüssig mit der Andruckfläche 5 verbunden ist und bei der es sich insbesondere um eine glaskeramische Schicht handelt. Die keramische Beschichtung 6 bestimmt mit einer der Andruckfläche 5 abgewandten Außenseite eine Trägerfläche 7, die rein exemplarisch als Ebene mit zwei jeweils rechteckig vertieften Ausnehmungen 8 ausgebildet ist. Auf die Trägerfläche 7 ist ein streifenförmig ausgebildeter Heizleiter 9 aufgebracht. Der Heizleiter 9 kann beispielhaft aus einem metallischen Bandmaterial hergestellt sein, das stoffschlüssig mit der Trägerfläche 7 verbunden wird, beispielsweise durch Löten, oder der Heizleiter 9 wird aus einer elektrisch leitenden, gestaltlosen Masse, die beispielsweise in einem aushärtbarem Binder aufgenommene Metallpartikel aufweisen kann, in einem geeigneten Verfahren auf die Trägerfläche 7 aufgebracht und dort ausgehärtet.

Die Trägerfläche 7 weist aufgrund der in die Ebene eingebrachten Ausnehmungen 8 mehrere, rein exemplarisch abgewinkelte Trägerflächenabschnitte 10 auf, die entsprechend der Darstellung der Figuren 1 bis 3 zumindest teilweise vom Heizleiter 9 überdeckt werden. Somit weist der Heizleiter 9 eine räumliche Gestaltung auf, bei der eine neutrale Faser 11 in der Schnittebene der Figur 1 liegt, die somit auch als Heizleiterebene bezeichnet werden kann. Die Heizleiterebene ist rein exemplarisch senkrecht zu einer von Außenkanten 15, 16 der Trägerfläche 7 bestimmten, nicht näher dargestellten Trägerflächenebene ausgerichtet und kann beispielsweise die in der Figur 2 eingezeichnete Schnittlinie 18 umfassen und dabei senkrecht zur Darstellungsebene der Figur 2 ausgerichtet sein.

Wie aus der Darstellung der Figur 1 entnommen werden kann, wird die stark schematisiert dargestellte neutrale Faser 11 durch eine Abfolge von jeweils rechtwinklig zueinander ausgerichteten Geradenabschnitten gebildet und folgt gemäß der Darstellung der Figur 1 in geometrisch ähnlicher Weise dem Verlauf der Trägerfläche 7. Wie weiter aus der Figur 1 entnommen werden kann, ist eine Wandstärke 19 zwischen der Kühlausnehmung 3 und der Andruckfläche 5 konstant ausgebildet, wodurch der Grundkörper 2 eine einfache Gestaltung aufweist. Die Geometrie der Trägerfläche 7 sowie des auf der Trägerfläche 7 aufgebrachten Heizleiters 9 wird rein exemplarisch durch abschnittsweise unterschiedliche Schichtdicken 20, 21 der keramischen Beschichtung 6 bestimmt.

Ferner ist rein exemplarisch vorgesehen, dass der Heizleiter 9 in nicht dargestellten Querschnittsebenen, die quer zur neutralen Faser 11 ausgerichtet sind, entlang seines gesamten Verlaufs den gleichen Querschnitt aufweist, was bei anderen nicht dargestellten Ausführungsformen von Heizleitern nicht zwingend der Fall sein muss. Vielmehr kann der Heizleiter längs der neutralen Faser auch längs seines Verlaufs variierende Querschnitte aufweisen.

Die Trägerfläche 7 sowie der Heizleiter 9 sind von einer Isolationsschicht 17 bedeckt, die zum einen eine elektrische Isolation für den Heizleiter 9 gewährleistet und zum anderen vorzugsweise als Antihaftbeschichtung ausgebildet oder mit einer zusätzlichen Antihaftbeschichtung versehen sein kann. Rein exemplarisch ist vorgesehen, dass die Isolationsschicht 17 auf den nicht bezeichneten, eben ausgebildeten Oberflächen der Trägerfläche 7 und des Heizleiters 9 jeweils die gleiche Schichtstärke aufweist und vorzugsweise eine hohe thermische Leitfähigkeit hat. Die Isolationsschicht 17 endet jeweils beabstandet von der kürzeren Außenkante 15 der Trägerfläche 7, wodurch Anschlussflächen 22, 23 des Heizleiters 9 frei bleiben, an denen eine Einspeisung von elektrischer Energie in den Heizleiter 9 ermöglicht wird. Rein exemplarisch ist die Isolationsschicht 17 als glaskeramische Schicht ausgebildet.

Bei einer Bereitstellung von elektrischer Energie an die beiden Anschlussflächen 22, 23 des Heizleizers 9 wird dieser von einem elektrischen Strom durchflossen, der zu einer Erwärmung des Heizleiters 9 führt. Die vom Heizleiter 9 bereitgestellte Wärme kann an die elektrisch isolierende Isolationsschicht 17 hindurch an ein nicht näher dargestelltes Kunststoffmaterial abgegeben werden, um dieses lokal zu Plastifizierung und eine Verschweißung mehrerer Lagen des Kunststoffmaterials miteinander zu ermöglichen. Anschließend erfolgt eine Abschaltung der Zufuhr von elektrischer Energie an den Heizleiter 9, so dass dieser keine weitere Wärme bereitstellt. Vielmehr erfolgt von dem nicht dargestellten Kunststoffmaterial ein Wärmeübergang über die Isolationsschicht 17, den Heizleiter 9, die keramische Beschichtung 6 und den Grundkörper 2 in das in der Kühlausnehmung 3 aufgenommene Kühlfluid. Hierdurch kann das Kunststoffmaterial rasch abgekühlt werden.

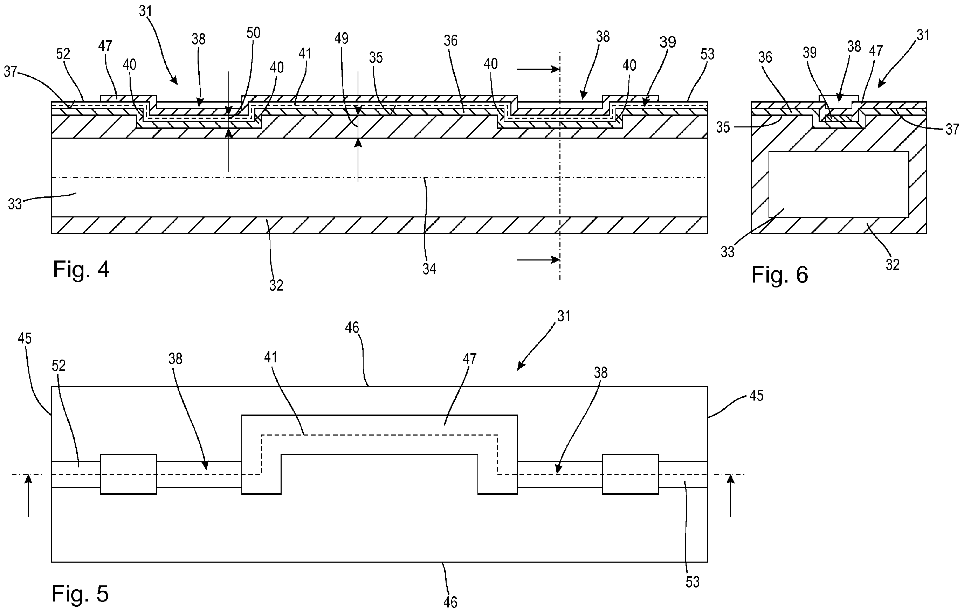

Bei der in den Figuren 4 bis 6 dargestellten zweiten Ausführungsform einer Heizeinrichtung 31 werden für diejenigen Komponenten, die funktionsgleich mit der Heizeinrichtung 1 sind, jeweils um 30 erhöhte Bezugszeichen verwendet und auf eine neuerliche Beschreibung dieser Komponenten verzichtet.

Bei der Darstellung der Figur 4 folgt der Schnittverlauf der neutralen Faser 41 des Heizleiters 39, wie sie in der Figur 5 dargestellt ist.

Bei der Heizeinrichtung 31 ist abweichend von der Heizeinrichtung 1 vorgesehen, dass eine Wandstärke 49 des Grundkörpers 32 zwischen einer Kühlausnehmung 33 und einer als Andruckfläche 35 bezeichneten Außenoberfläche variabel ausgebildet ist, während eine Schichtstärke 50 der auf die Andruckfläche 35 aufgebrachten keramischen Beschichtung 36 konstant ist. Hierdurch wird im Bereich der Ausnehmungen 38 in der Trägerfläche 37, in denen aufgrund des abgewinkelten Verlaufs des Heizleiters 39 sowie der jeweils konkaven Vertiefung durch die Ausnehmungen 38 eine besonders hohe Energiedichte bei Strombeaufschlagung des Heizleiters 39 auftritt, eine besonders vorteilhafte Kühlwirkung durch das in der Kühlausnehmung 33 aufgenommene, insbesondere strömende Kühlfluid, gewährleistet.

Wie aus den Darstellungen der Figuren 4 und 5 entnommen werden kann, verläuft die neutrale Faser 41 des Heizleiters 39 entlang eines dreidimensionalen Nahtverlaufspfads, da der Heizleiter 39 in allen drei Raumrichtungen eines kartesischen Koordinatensystems abgewinkelt ist.

## Patentansprüche

1. Heizeinrichtung zum thermischen Fügen von Kunststoffmaterialien, mit einem Grundkörper (2; 32), der von einer Kühlausnehmung (3; 33) durchsetzt ist und an dem eine elektrisch isolierende Trägerfläche (7; 37) ausgebildet ist, auf der wenigstens ein elektrisch leitfähiger Heizleiter (9; 39) angeordnet ist, der an einer der Trägerfläche (7; 37) abgewandten Kontaktoberfläche mit einer elektrisch isolierenden Beschichtung (17; 47) versehen ist, wobei die Trägerfläche (7; 37) wenigstens einen gekrümmten oder abgewinkelten Trägerflächenabschnitt (10; 40) aufweist und wobei der Heizleiter (9; 39) den gekrümmten oder abgewinkelten Trägerflächenabschnitt (10; 40) zumindest bereichsweise überdeckt, **dadurch gekennzeichnet, dass** die elektrisch isolierende Trägerfläche (7; 37) von einer keramischen Beschichtung (6; 36) bestimmt wird, die auf eine am Grundkörper (2; 32) ausgebildete Andruckfläche (5; 35) aufgebracht ist.

2. Heizeinrichtung nach Anspruch 1, **dadurch gekennzeichnet, dass** eine Wandstärke (19) des Grundkörpers (2) zwischen der Kühlausnehmung (3) und der Andruckfläche (5) unterhalb der elektrisch isolierenden Trägerfläche (7) konstant ist.

3. Heizeinrichtung nach Anspruch 1, **dadurch gekennzeichnet, dass** eine erste Wandstärke des Grundkörpers (32) zwischen der Kühlausnehmung (33) und der Andruckfläche (35) unterhalb eines konkav gekrümmten Trägerflächenabschnitts (40) kleiner als eine zweite Wandstärke des Grundkörpers (32) zwischen der Kühlausnehmung (33) und der Andruckfläche (35) unterhalb eines ebenen oder konvex gekrümmten Trägerflächenabschnitts ausgebildet ist.

4. Heizeinrichtung nach Anspruch 1, 2, oder 3, **dadurch gekennzeichnet, dass** eine neutrale Faser (11; 41) des Heizleiters (9; 39) eine vorgebbare räumliche Gestaltung aufweist und/oder dass die Andruckfläche (5; 35) eine zu einer räumlichen Gestaltung einer neutralen Faser (11; 41) des Heizleiters (9; 39) korrespondierende, vorzugsweise geometrisch ähnliche, Oberflächengeometrie aufweist.

5. Heizeinrichtung nach Anspruch 4, **dadurch gekennzeichnet, dass** eine Schichtdicke (50) der keramischen Beschichtung (36), die auf die Andruckfläche (35) aufgebracht ist, konstant ist.

6. Heizeinrichtung nach Anspruch 1, 2 oder 3, **dadurch gekennzeichnet, dass** die Andruckfläche (5) eben ausgebildet ist und dass eine Schichtdicke der keramischen Beschichtung (6), die auf die ebene Andruckfläche aufgebracht (5) ist, variabel ausgebildet ist, um den wenigstens einen gekrümmten Trägerflächenabschnitt (10) zu bilden.

7. Heizeinrichtung nach einem der vorhergehenden Ansprüche, **dadurch gekennzeichnet, dass** der Heizleiter (9; 39) derart räumlich ausgebildet ist, dass er sich in einer Raumrichtung, in der eine Querschnittserstreckung des Heizleiters (9; 39) minimal ist, zwischen zwei parallel zueinander ausgerichteten Ebenen erstreckt, deren Abstand größer als die Querschnittserstreckung in dieser Raumrichtung ist.

8. Heizeinrichtung nach einem der vorhergehenden Ansprüche, **dadurch gekennzeichnet, dass** der Heizleiter (9; 39) derart räumlich ausgebildet ist, dass er sich in einer Raumrichtung, in der eine Querschnittserstreckung des Heizleiters (9; 39) maximal ist, zwischen zwei parallel zueinander ausgerichteten Ebenen erstreckt, deren Abstand größer als die Querschnittserstreckung in dieser Raumrichtung ist.

9. Heizeinrichtung nach einem der vorhergehenden Ansprüche, **dadurch gekennzeichnet, dass** der Heizleiter (9; 39) in Querschnittsebenen, die quer zu einer neutralen Faser (11; 41) des Heizleiters (9; 39) ausgerichtet sind, unterschiedliche Querschnitte aufweist.

## Claims

1. Heating device for thermal joining of plastic materials having a base body (2; 32), which is penetrated by a cooling recess (3; 33) and on which an electrically insulating support surface (7; 37) is configured, on which at least one electrically conductive heat conductor (9; 39) is arranged, which is provided with an electrically insulating coating (17; 47) on a contact surface facing away from the support surface (7; 37), wherein the support surface (7; 37) has at least one curved or angled support surface section (10; 40) and wherein the heat conductor (9; 39) overlaps the curved or angled support surface section (10; 40) at least in parts, **characterised in that** the electrically insulating support surface (7; 37) is defined by a ceramic coating (6; 36), which is applied to a pressing surface (5; 35) configured on the base body (2; 32).

2. Heating device according to Claim 1, **characterised in that** a wall thickness (19) of the base body (2) between the cooling recess (3) and the pressing surface (5) below the electrically insulating support surface (7) is constant.

3. Heating device according to Claim 1, **characterised in that** a first wall thickness of the base body (32) between the cooling recess (33) and the pressing surface (35) below a concave support surface section (40) is configured to be less than a second wall thickness of the base body (32) between the cooling recess (33) and the pressing surface (35) below a flat or convex support surface section.

4. Heating device according to Claim 1, 2, or 3, **characterised in that** a neutral axis (11; 41) of the heat conductor (9; 39) has a spatial design that can be preset and/or that the pressing surface (5; 35) has a surface geometry corresponding, preferably geometrically similar to a spatial design of a neutral axis (11; 41) of the heat conductor (9; 39) .

5. Heating device according to Claim 4, **characterised in that** a layer thickness (50) of the ceramic coating (36), which is applied to the pressing surface (35), is constant.

6. Heating device according to Claim 1, 2 or 3, **characterised in that** the pressing surface (5) is configured as flat and that a layer thickness of the ceramic coating (6), which is applied to the flat pressing surface (5), is configured as variable in order to create the at least one curved support surface section (10).

7. Heating device according to any one of the preceding claims, **characterised in that** the heat conductor (9; 39) is configured spatially such that it extends in a spatial direction in which a cross-sectional extent of the heat conductor (9; 39) is minimal, between two planes aligned parallel to each other, the distance between which is greater than the cross-sectional extent in said spatial direction.

8. Heating device according to any one of the preceding claims, **characterised in that** the heat conductor (9; 39) is configured spatially such that it extends in a spatial direction in which a cross-sectional extent of the heat conductor (9; 39) is maximal, between two planes aligned parallel to each other, the distance between which is greater than the cross-sectional extent in said spatial direction.

9. Heating device according to any one of the preceding claims, **characterised in that** the heat conductor (9; 39) has different cross-sections in cross-sectional planes, which are aligned at right angles to a neutral axis (11; 41) of the heat conductor (9; 39).

## Revendications

1. Dispositif de chauffage servant à assembler thermiquement des matériaux en plastique, avec un corps de base (2 ; 32), qui est traversé par un évidement de refroidissement (3 ; 33) et au niveau duquel une face de support (7 ; 37) à isolation électrique est réalisée, sur laquelle au moins un conducteur de chauffage (9 ; 39) électroconducteur est disposé, qui est pourvu, au niveau d'une surface de contact opposée à la face de support (7 ; 37), d'un revêtement (17 ; 47) à isolation électrique, dans lequel la face de support (7 ; 37) présente au moins une section de face de support (10 ; 40) incurvée ou coudée et dans lequel le conducteur de chauffage (9 ; 39) recouvre au moins en partie la section de face de support (10; 40) incurvée ou coudée, **caractérisé en ce que** la face de support (7 ; 37) à isolation électrique est définie par un revêtement (6 ; 36) en céramique, qui est appliqué sur une face de compression (5 ; 35) réalisée au niveau du corps de base (2 ; 32).

2. Dispositif de chauffage selon la revendication 1, **caractérisé en ce qu'**une épaisseur de paroi (19) du corps de base (2) est constante entre l'évidement de refroidissement (3) et la face de compression (5) sous la face de support (7) à isolation électrique.

3. Dispositif de chauffage selon la revendication 1, **caractérisé en ce qu'**une première épaisseur de paroi du corps de base (32) est réalisée entre l'évidement de refroidissement (33) et la face de compression (35) sous une section de face de support (40) incurvée de manière concave, qui est inférieure à une deuxième épaisseur de paroi du corps de base (32) entre l'évidement de refroidissement (33) ou la face de compression (35) sous une section de face de support plane ou incurvée de manière convexe.

4. Dispositif de chauffage selon la revendication 1, 2 ou 3, **caractérisé en ce qu'**une fibre (11 ; 41) neutre du conducteur de chauffage (9 ; 39) présente une configuration spatiale pouvant être prédéfinie, et/ou que la face de compression (5 ; 35) présente une géométrie de surface, correspondant, de préférence similaire sur le plan géométrique, à une configuration spatiale d'une fibre neutre (11 ; 41) du conducteur de chauffage (9 ; 39).

5. Dispositif de chauffage selon la revendication 4, **caractérisé en ce qu'**une épaisseur de couche (50) du revêtement (36) en céramique, qui est appliqué sur la face de compression (35), est constante.

6. Dispositif de chauffage selon la revendication 1, 2 ou 3, **caractérisé en ce que** la face de compression (5) est réalisée de manière plane, et qu'une épaisseur de couche du revêtement (6) en céramique, qui est appliqué sur la face de compression (5) plane, est réalisée de manière variable pour former l'au moins une section de face de support (10) incurvée.

7. Dispositif de chauffage selon l'une quelconque des revendications précédentes, **caractérisé en ce que** le conducteur de chauffage (9 ; 39) est réalisé spatialement de telle manière qu'il s'étend dans une direction spatiale, dans laquelle une extension de section transversale du conducteur de chauffage (9 ; 39) est minimale, entre deux plans orientés de manière parallèle l'un par rapport à l'autre, dont la distance est plus grande que l'extension de section transversale dans ladite direction spatiale.

8. Dispositif de chauffage selon l'une quelconque des revendications précédentes, **caractérisé en ce que** le conducteur de chauffage (9 ; 39) est réalisé spatialement de telle manière qu'il s'étend dans une direction spatiale, dans laquelle une extension de section transversale du conducteur de chauffage (9 ; 39) est maximale, entre deux plans orientés de manière parallèle l'un par rapport à l'autre, dont la distance est plus grande que l'extension de section transversale dans ladite direction spatiale.

9. Dispositif de chauffage selon l'une quelconque des revendications précédentes, **caractérisé en ce que** le conducteur de chauffage (9 ; 39) présente différentes sections transversales dans des plans de section transversale, qui sont orientés de manière transversale par rapport à une fibre (11, 41) neutre du conducteur de chauffage (9 ; 39).
